# EUROPEAN PATENT SPECIFICATION

(11) **EP 1 238 894 B1**
(45) Date of publication and mention of the grant of the patent: **11.05.2005**
(21) Application number: 02003343.7
(22) Date of filing: 13.02.2002
(51) Int. Cl.: B62D 25/20

(54) **Vehicle body stiffener structure**
Fahrzeugkarosserie mit Versteifungsstruktur
Carrosserie de véhicule avec structure de renforcement

(30) Priority: 09.03.2001 JP 2001066475
(43) Date of publication of application: 11.09.2002
(73) Proprietor: Honda Giken Kogyo Kabushiki Kaisha, Minato-ku, Tokyo (JP)
(72) Inventor: Saito, Isao, Wako-shi, Saitama (JP)
(74) Representative: Liska, Horst, Dr.-Ing.

(56) References cited:
- US-A- 5 472 259
- US-A- 5 954 390
- PATENT ABSTRACTS OF JAPAN vol. 008, no. 096 (M-294), 4 May 1984 (1984-05-04) -& JP 59 011979 A (NISSAN JIDOSHA KK), 21 January 1984 (1984-01-21)

## Description

### BACKGROUND OF THE INVENTION

This invention relates to a joint assembly of vehicle frame according to the preamble part of claim 1, and more particularly this application focusses on a stiffener increasing stiffness of a junction between two components to be joined transversely to each other.

A joint assembly of the generic kind is known from US 5954390 A. This document shows a joint assembly of vehicle frames comprising a side sill extending in a longitudinal direction of the vehicle, a traverse member extending in a traverse direction of the vehicle and a B-pillar extending in a vertical direction of the vehicle.

The traverse member and the B-pillar are directly connected to each other. The traverse member and the combined side sill and B-pillar are connected by a connecting element that has an upper portion shaped approximately like the letter L in cross-section including a riser portion extending in the vertical direction of the vehicle. The riser portion is attached to the B-pillar, whereas the lateral portion is attached to a bottom planar portion of the transverse member.

From the lateral portion of the connecting element end brackets extend downwards to connect to the side sill.

Further, reference is made to document US 5472259 A. This document deals with the problem of controlling vibration of a rear floor pan without causing an increase in the weight of the vehicle body and being able to sufficiently reduce road noise. To this end a traverse member is connected to a bracket and the bracket is in turn connected to a front-rear direction member of a vehicle body. The bracket comprises a reinforcing plate which is shaped in its cross-section like the letter L, wherein the vertical leg of the front-rear direction element facing the traverse member and the lateral portion of the reinforcing plate being in abutment with the spacer bushing.

Another related prior art document is JP 590 11 979 A. This document discloses a joint assembly of vehicle body parts. It deals with the problem of improving the rigidity against a tensile load exerted on a tie-down bracket. This is achieved by fixing a reinforcing flange part extending from the front end of the tie-down bracket to the side wall of an L-shaped bracket. More precisely, a tie-down bracket is provided in a U-shaped front-rear direction element, wherein the tie-down bracket is fixed to the bottom portion of the front-rear direction member and has vertically extending attachment walls being fixed to side walls of the front-rear direction member such that the tie-down bracket is surrounded by the front-rear direction member on three sides.

At its front end the tie-down bracket is provided with a flange portion extending substantially in the vertical direction, said flange portion being mounted to a bracket. The tie-down bracket therefore has an L-shaped longitudinal section and a U-shaped cross-section.

In the following, further prior art background is explained:

Conventionally, transportation of an automobile on a bed in a carrier such as a ship has been carried out with a vehicle body of the automobile secured on the bed. The vehicle body is tied down by fitting tie-down hooks mounted on the bed into tie-down holes bored in a side member or the like of the vehicle body. In general, the tie-down hole is reinforced with a tie-down bracket to prevent deformation of the tie-down hole by the tie-down hook.

Among various structures of the tie-down bracket is, for instance, a stiffener structure provided near a rear portion of a side sill inner extending in a front-rear direction on each side of the vehicle body as shown in FIG. 10 (see Japanese Patent Application, Kokoku Publication No. 8-9348, B2).

In this structure, a tie-down bracket 14 is joined to an upper side of a rear side member 13, which is interposed between a side sill inner 11 and a cross member 12; a rear floor panel 15 is joined to an upper side of the cross member 12 and rear side member 13.

In the above structure, a riser portion 14a of the tie-down bracket 14 is joined to a side planar portion 13a of the rear side member 13, while the side sill inner 11 and cross member 12 are joined to each other only with a flange 12b formed on each widthwise outer end of the cross member 12. A bottom planar portion 12a of the cross member 12 and a bottom planar portion 11a of the side sill inner 11 are joined together in such a manner that the bottom planar portions 12a and 11a are vertically shifted relative to each other.

However, such a conventional structure as described above would not allow the tie-down bracket 14 to server to reinforce a joint part between the side sill inner 11 and the cross member 12. Moreover, the joint part between the side sill inner 11 and the cross member 12 consists only of the flange 12b of the cross member 12. Thus, there has arisen demand for the structure of the joint part between the side sill inner 11 and the cross member 12 having much higher stiffness than the conventional structure.

Moreover, since the cross member 12 and the side sill inner 11 are joined together in such a manner that the bottom planar portions 12a and 11a thereof are vertically shifted relative to each other, a side planar portion 11b of the side sill inner 11 could possibly be bent and deformed upon application of a side collision load on the vehicle. Accordingly, the load would become unlikely to be transmitted to the cross member 12; consequently, the side sill inner does not contribute to improved lateral stiffness of the vehicle body so much.

### SUMMARY OF THE INVENTION

Therefore, it is an object of the present invention to enhance the joint between a longitudinal extending frame member of a vehicle body and a traversely extending frame member of the vehicle body.

This object is attained by a joint assembly having the features of claim 1.

According to one exemplified embodiment of the present invention among those which may achieve the above objects, there is provided a vehicle body stiffener structure that reinforces a joint part between a front-rear direction member extending in a front-rear direction of the vehicle body, and a traverse member intersecting the vehicle body, the front-rear direction member including at least a side planar portion and a bottom planar portion, the traverse member including at least a bottom planar portion, a stiffener for use with the vehicle body stiffener structure including a riser portion shaped approximately like the letter L in cross section, and a lateral portion. The riser portion of the stiffener is attached at the side planar portion of the front-rear direction member, while the lateral portion of the stiffener is attached to any one of the bottom planar portion of the traverse member and the bottom planar portion of the front-rear direction member.

According to the embodiment, the riser portion of the stiffener shaped approximately like the letter L in cross section is joined to the side planar portion of the front-rear direction member, while the lateral portion thereof is joined to the bottom planar portion of the traverse member; thus, stiffness of the joint part between the front-rear direction member and the traverse member is increased. On the other hand, if the riser portion of the stiffener shaped approximately like the letter L in cross section is joined to the side planar portion of the front-rear direction member, while the lateral portion thereof is joined to the bottom planar portion of the front-rear direction member, then the stiffener reinforces the front-rear direction member from the side planar portion along the bottom planar portion, and thus stiffness of the side planar portion and bottom planar portion of the front-rear direction member may be increased.

The phrase "shaped approximately like a letter L in cross section" is used to indicate that the stiffener is bent so that the riser portion of the stiffener may come in contact with the side planar portion of the front-rear direction member, and that the lateral portion of the stiffener may come in contact with the bottom planar portion of the traverse member or the bottom planar portion of the front-rear direction member.

Another exemplary embodiment of the present invention provides a vehicle body stiffener structure, in which the traverse member includes at least one of a front planar portion and a rear planar portion that rises form the bottom planar portion, and the stiffener includes a riser wall portion that comes in contact with the one of the front planar portion and the rear planar portion.

According to this embodiment, the riser wall portion of the stiffener reinforces the front planar portion or rear planar portion of the traverse member, and thus stiffness of the stiffener itself may also be increased as the riser wall portion reinforces the riser portion and the lateral portion of the stiffener.

Still another embodiment of the present invention provides a vehicle body stiffener structure, in which the riser portion and riser wall portion of the stiffener are continuously formed.

According to this embodiment, the continuous riser portion and riser wall portion are joined so as to cover the side planar portion of the front-rear direction member and the front planar portion or rear planar portion of the traverse member, and thus stiffness of the joint portion between the front-rear direction member and the traverse member may further be increased.

Still another embodiment of the present invention provides a vehicle body stiffener structure, in which the bottom planar portion of the front-rear direction member and the bottom planar portion of the traverse member are substantially flush with each other.

According to this embodiment, the bottom planar portion of the front-rear direction member and the bottom planar portion of the traverse member are substantially flush with each other, and thus a side collision load may efficiently be transmitted to the bottom planar portion of the traverse member and lateral stiffness of the vehicle body may be increased.

The phrase "substantially flush" is used to indicate, needless to say, that the bottom side of the bottom planar portion of the front-rear direction member and the bottom side of the bottom planar portion of the traverse member are flush with each other but further that the bottom side of the bottom planar portion of the traverse member is vertically shifted relative to the bottom side of the bottom planar portion of the front-rear direction member by the board thickness of the traverse member.

Still another embodiment of the present invention provides a vehicle body stiffener structure, in which the stiffener is a tie-down bracket that reinforces a tie-6down hole.

According to this embodiment, the tie-down bracket is used to reinforce the joint part between the front-rear direction member and the traverse member, and thus no additional stiffener may be required as another part, whereby the number of parts may be reduced.

Other objects and further features of the present invention will become readily apparent form the following description of preferred embodiments with reference to accompanying drawings.

### BRIEF DESCRIPTION OF THE DRAWINGS

FIG. 1 is a schematic perspective view of a vehicle body, showing a first embodiment of the present invention.
FIG. 2 is an exploded view, in perspective, of a portion encircled with a broken line indicated by an arrow a in FIG. 1.
FIG. 3 is a perspective view of parts shown in FIG. 2 assembled and joined together.
FIG. 4 is a cross-sectional view taken along an arrowed dot-dash line A-A in FIG. 3.
FIG. 5 is an exploded view, in perspective, showing a second embodiment of the present invention.
FIG. 6 is a perspective view of a variation of a tie-down bracket shown in FIG. 5.
FIG. 7 is a perspective view of parts shown in FIG. 5 assembled and joined together.
FIG. 8 is an exploded view, in perspective, showing a third embodiment of the present invention.
FIG. 9 is a plan view of parts shown in FIG. 8 assembled and joined together.

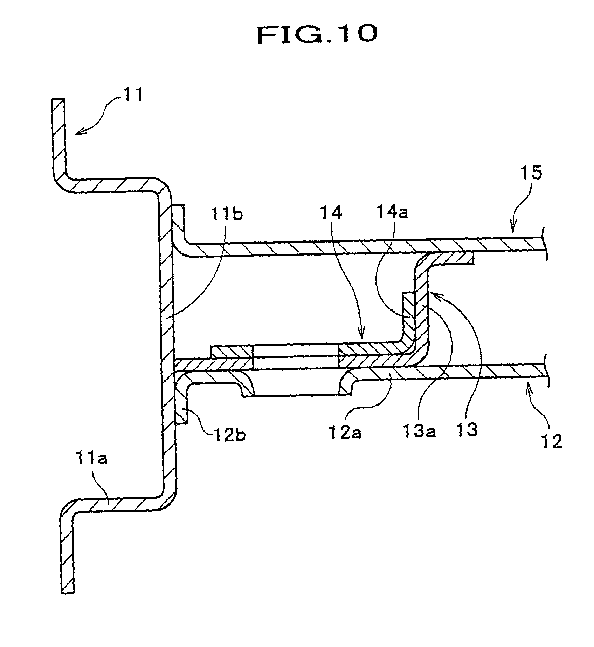

FIG. 10 is a cross-sectional view of an attachment part structure of a conventional tie-down bracket.

### DETAILED DESCRIPTION OF THE PREFERRED EMBODIMENTS

### [FIRST EMBODIMENT]

A detailed description will now be given of a vehicle body stiffener structure according to the present invention with reference to the drawings.

The present embodiment is an application of the present invention to an attachment part structure of a tie-down bracket attached to a position near a front portion of a side sill inner that is disposed at each side of the vehicle body so as to extend in a front-rear direction of a vehicle body.

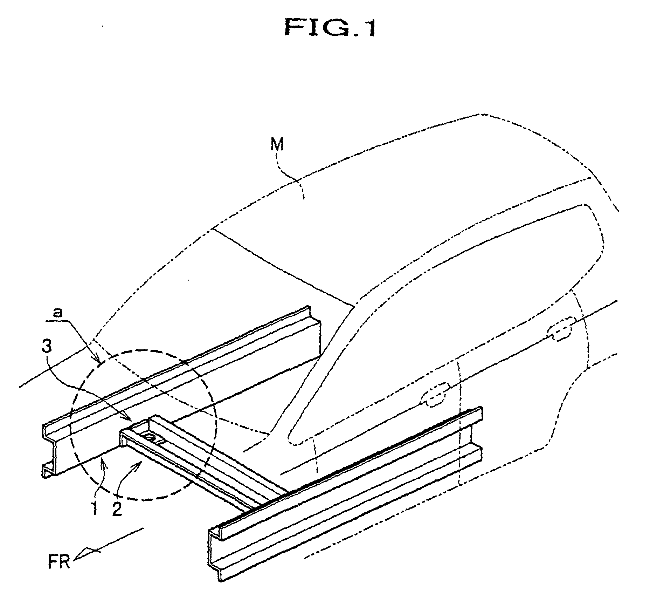

As shown in FIG. 1, the attachment part structure of the tie-down bracket is comprised of a side sill inner (front-rear direction member) 1 that extends in a front-rear direction of a vehicle body M, a cross member (traverse member) 2 that is joined with the side sill inner 1 so as to intersect the vehicle body, and a tie-down bracket (stiffener) 3 with a section shaped approximately like a letter L. The arrow FR indicates a front direction of the vehicle.

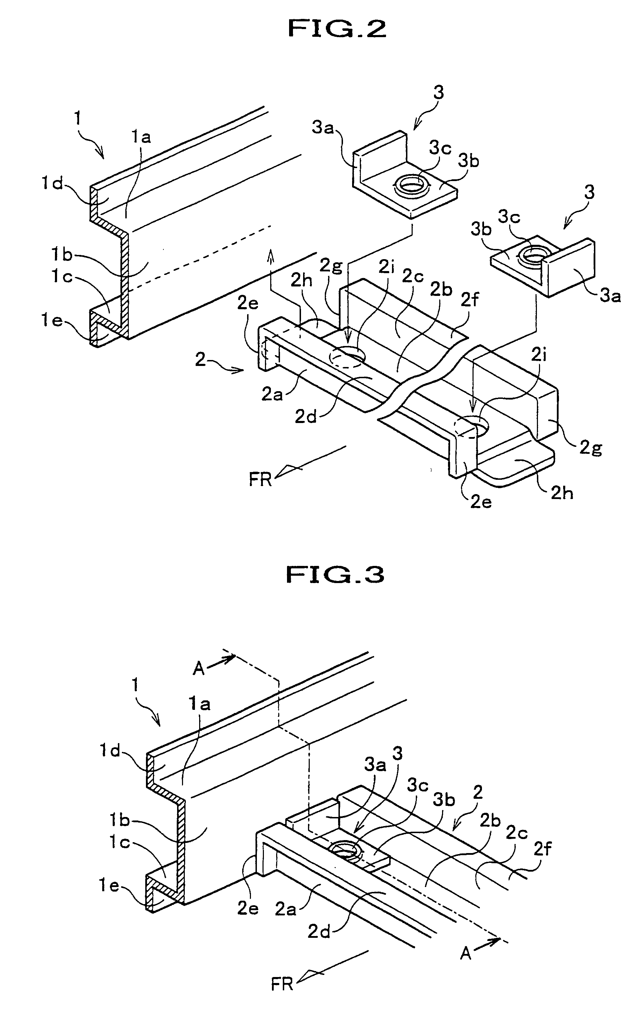

As shown in FIG. 2, the side sill inner 1 is formed approximately into the shape of a letter U in cross section with a top planar portion 1a, a side planar portion 1b, and a bottom planar portion 1c. The opening of the approximate U-section is oriented outward widthwise. At a widthwise outer end (hereinafter referred to as an outer end) of the top planar portion 1a is formed a flange 1d extending upward, while at an outer end of the bottom planar portion 1c is formed a flange 1e extending downward.

The cross member 2 is formed approximately into the shape of a letter U in cross section with a front planar portion 2a, a bottom planar portion 2b, and a rear planar portion 2c. The opening of the approximate U-section is oriented upward. At an upper end of the front planar portion 2a is formed a flange 2d extending frontward, while at an outer end of the front planar portion 2a is formed a flange 2e extending frontward. At an upper end of the rear planar portion 2c is formed a flange 2f extending rearward, while at an outer end of the rear planar portion 2c is formed a flange 2g extending rearward. At an outer end of the bottom planar portion 2b is formed an extended planar portion 2h extending outward widthwise in a position lower than the bottom planar portion 2b by a board thickness of the cross member 2. A tie-down hole 2i is bored near the outer end of the bottom planar portion 2b of the cross member 2.

The tie-down bracket 3 is formed approximately into the shape of a letter L with a riser portion 3a, and a lateral portion 3b. A tie-down hole 3c having substantially the same diameter as the tie-down hole 2i is bored near a midsection of the lateral portion 3b.

Next, a description will be given of a method of assembling and joining the aforementioned parts.

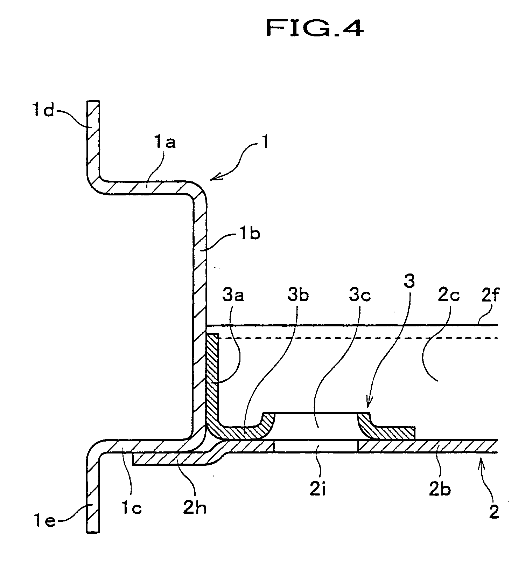

As shown in FIG. 3, a top side of the extended planar portion 2h of the cross member 2 is brought into contact with a bottom side of a position near a front portion of the bottom planar portion 1c of the side sill inner 1, while a widthwise outer side of the flanges 2e, 2g of the cross member 2 is brought into contact with a widthwise inner side of the side planar portion 1b of the side sill inner 1. In this configuration, since the extended planar portion 2h of the cross member 2 is located lower than the bottom planar portion 2b thereof by a board thickness of the cross member 2 as shown in FIG. 4, a bottom surface of the bottom planar portion 2b of the cross member 2 and a bottom surface of the bottom planar portion 1c are flush with each other. Then, the side sill inner 1 and cross member 2 are joined by welding contact portions thereof. Next, a widthwise outer side of the riser portion 3a of the tie-down bracket 3 is brought into contact with a widthwise inner side of the side planar portion 1b of the side sill inner 1, while a bottom side of the lateral portion 3b of the tie-down bracket 3 is brought into contact with a top side of the bottom planar portion 2b of the cross member 2. In that event, the tie-down hole 3c in the tie-down bracket 3 and the tie-down hole 2i in the cross member 2 are aligned with each other. Then, the tie-down bracket 3, side sill inner 1, and cross member 2 are joined by welding contact portions thereof.

According to the above method, the riser portion 3a of the tie-down bracket 3 approximately shaped like a letter L in cross section is joined to the side planar portion 1b of the side sill inner 1, and the lateral portion 3b thereof is joined to the bottom planar portion 2b of the cross member 2; therefore, stiffness of the joint part between the side sill inner 1 and the cross member 2 may be enhanced. Moreover, the tie-down bracket 3 is used to reinforce the joint part between the side sill inner 1 and the cross member 2; thus no additional stiffener is required, and the number of parts may be reduced. Furthermore, since the bottom planar portion 1c of the side sill inner 1 and the bottom planar portion 2b of the cross member 2 are flush with each other, a side collision load is transmitted efficiently to the bottom planar portion 2b of the cross member 2, and thus lateral stiffness of the vehicle body may be increased.

Although the lateral portion of the tie-down bracket is joined to the bottom planar portion of the cross member in the present embodiment, the present invention is not limited thereto, but may be applied to such a structure that the lateral portion of the tie-down bracket is joined to the bottom planar portion of the side sill inner. According to this structure in which the lateral portion of the tie-down bracket is joined to the bottom planar portion of the side sill inner, the tie-down bracket reinforces the side sill inner from the side along the bottom planar portion thereof, and thus stiffness of the side planar portion and bottom planar portion of the side sill inner is improved. However, a tie-down hole need be bored in the bottom planar portion of the side sill inner in this embodiment.

### [SECOND EMBODIMENT]

A description will now be given of a second embodiment of the vehicle body stiffener structure according to the present invention. Since the present embodiment is a variation of the first embodiment, which includes a modified form of the tie-down bracket, the same elements as in the first embodiment will be designated by the same reference numerals, and a duplicate explanation will be omitted.

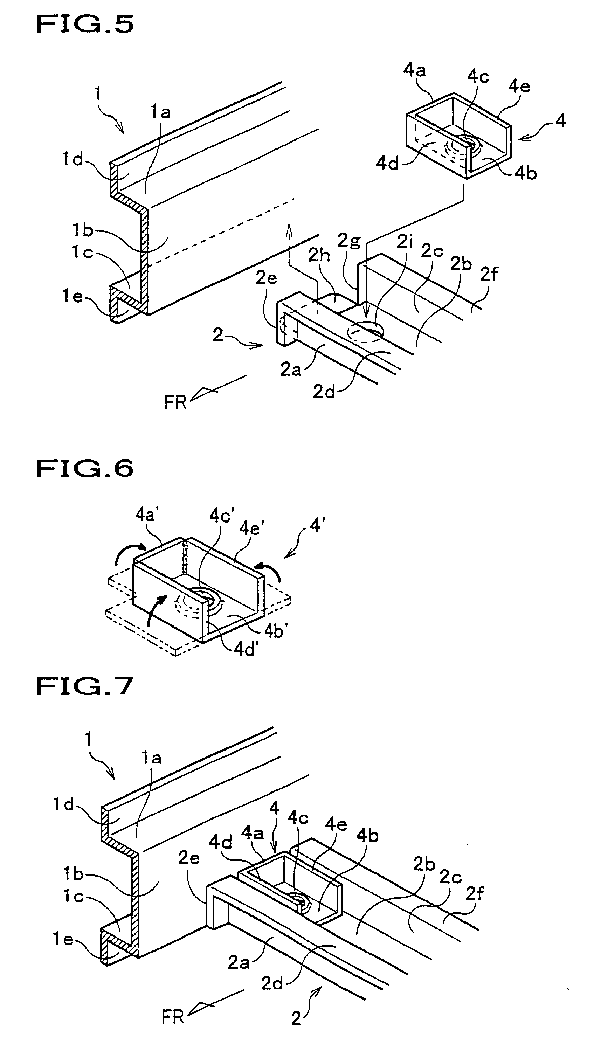

A tie-down bracket (stiffener) 4 is formed, as shown in FIG. 5, approximately into the shape of a letter L in cross section with a riser portion 4a and a lateral portion 4b. A tie-down hole 4c having substantially the same diameter as the tie-down hole 2i bored in the cross member 2 is bored in a position near a midsection of the lateral portion 4b. The length of the lateral portion 4b in a front-rear direction is substantially the same as the length of the bottom planar portion 2b of the cross member 2 in the front-rear direction. At a front end of the lateral portion 4b is formed a flange (riser wall portion) 4d extending upward, while at a rear end thereof is formed a flange 4e extending upward. The riser portion 4a, lateral portion 4b, and flanges 4d, 4e are continuously formed together by presswork process.

The tie-down bracket 4 need not be formed integrally by the presswork process. For instance, as shown in FIG. 6, the riser portion 4a', and flanges (riser wall portions) 4d', 4e' may be formed without continuity and integrated later by bending the lateral portion 4b' at each peripheral end, and then joining the riser portion 4a' and flanges 4d', 4e' by welding.

Next, a description will be given of a method of attaching the tie-down bracket 4.

First, the side sill inner 1 and the cross member 2 are assembled and joined as in the first embodiment. Thereafter, the riser portion 4a and lateral portion 4b of the tie-down bracket 4 are respectively brought into contact with the side planar portion 1b of the side sill inner 1 and the bottom planar portion 2b of the cross member 2, as in the first embodiment. In that event, since the lateral portion 4b of the tie-down bracket 4 and the bottom planar portion 2b of the cross member 2 have substantially the same length in the front-rear direction, a front side of the flange 4d is brought into contact with a rear side of the front planar portion 2a of the cross member 2, and a rear side of the flange 4e is brought into contact with a front side of the rear planar portion 2c of the cross member 2, as shown in FIG. 7. Then, contact portions of these elements are joined by welding.

According to the above method, the flanges 4d, 4e of the tie-down bracket 4 are joined to the front planar portion 2a and rear planar portion 2c of the cross member 2, so that stiffness of the cross member 2 against a collision load in the front-rear direction may be enhanced. Moreover, the continuously formed riser portion 4a and flanges 4d, 4e are joined to the side planar portion 1b of the side sill inner 1 as well as the front planar portion 2a and rear planar portion 2c of the cross member 2; thus, stiffness of the joint part between the side sill inner 1 and the cross member 2 may be increased further. Furthermore, the flanges 4d and 4e of the tie-down bracket 4 reinforces the riser portion 4a and lateral portion 4b of the tie-down bracket 4, and thus stiffness of the tie-down bracket itself may be enhanced.

### [THIRD EMBODIMENT]

A description will now be given of a third embodiment of the vehicle body stiffener structure according to the present invention. Since the present embodiment is a variation of the first or second embodiment, which includes a modified form of the tie-down bracket, the same elements as in the first or second embodiment will be designated by the same reference numerals, and a duplicate explanation will be omitted.

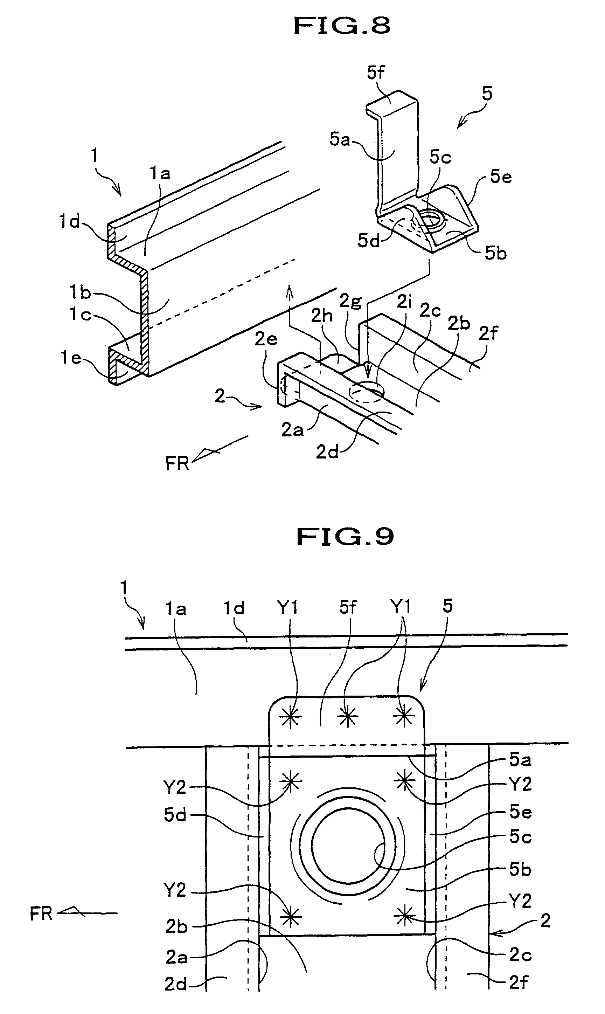

A tie-down bracket (stiffener) 5 is formed, as shown in FIG. 8, approximately into the shape of a letter L in cross section with a riser portion 5a and a lateral portion 5b. A tie-down hole 5c having substantially the same diameter as the tie-down hole 2i bored in the cross member 2 is bored in a position near a midsection of the lateral portion 5b. The length of the lateral portion 5b in a front-rear direction is substantially the same as the length of the bottom planar portion 2b of the cross member 2 in the front-rear direction. At front and rear ends of the lateral portion 5b are formed without continuity flanges (riser wall portions) 5d, 5e extending upward with the riser portion 5a. The riser portion 5a is longer than the flanges 5d, 5e in a vertical direction, and the height thereof is substantially the same as that of the side planar portion 1b of the side sill inner 1. Further, at an upper end of the riser portion 5a is formed a flange 5f extending outward widthwise.

Next, a description will be given of a method of attaching the tie-down bracket 5.

First, the side sill inner 1 and the cross member 2 are assembled and joined as in the first or second embodiment. Thereafter, the riser portion 5a and lateral portion 5b of the tie-down bracket 5 are brought into contact respectively with the side planar portion 1b of the side sill inner 1 and the bottom planar portion 2b of the cross member 2, as in the first or second embodiment. In that event, the lateral portion 5b of the tie-down bracket 5 and the bottom planar portion 2b of the cross member 2 have substantially the same length in the front-rear direction; thus, as shown in FIG. 9, a front side of the flange 5d is brought into contact with a rear side of the front planar portion 2a of the cross member 2, and a rear side of the flange 5e is brought into contact with a front side of the rear planar portion 2c of the cross member 2. Furthermore, the riser portion 5a of the tie-down bracket 5 and the side planar portion 1b of the side sill inner 1 have substantially the same length in a vertical direction; thus, a bottom side of a flange 5f of the tie-down bracket 5 is brought into contact with a top side of the top planar portion 1a of the side sill inner 1. Then, contact portions of these elements are joined by welding. In that event, a welding point Y1 between the flange 5f of the tie-down bracket 5 and the top planar portion 1a of the side sill inner 1, and a welding point Y2 between the lateral portion 5b of the tie-down bracket 5 and the bottom planar portion 2b of the cross member 2 are so positioned as to permit welding in the same direction.

According to the above method, since the flange 5f is provided at a top end of the riser portion 5a of the tie-down bracket 5, and thus the flange 5f and the lateral portion 5b may be welded in the same direction, the welding of the flange 5f and the lateral portion 5b may be performed in one and the same process step. Therefore, the tie-down bracket 5 may be securely joined to the side sill inner 1 and the cross member 1 without increase of the process step.

Moreover, without joining the riser portion 5a of the tie-down bracket 5 and the side planar portion 1b of the side sill inner 1, the joint part between the side sill inner 1 and the cross member 2 may be reinforced with the tie-down bracket 5 only by welding the welding point Y1 and the welding point Y2. Accordingly, the process step of joining the riser portion 5a of the tie-down bracket 5 and the side planar portion 1b of the side sill inner 1 may be omitted, so that an operation time may be shortened.

For example, in the above-described embodiments, the present invention is applied to the structure in which the side sill inner and the cross member are directly joined, but may be applied as conventional instances to structures in which the side sill inner and the cross member are joined to each other with a rear side member interposed therebetween. In this embodiment, a lateral portion of a tie-down bracket is attached at a bottom of the cross member through the rear side member.

Moreover, although the side sill inner exemplifies the front-rear direction member, and the cross member exemplifies the traverse member in the above-described embodiment, the present invention is not limited thereto. For example, the front-rear direction member may be either of a side sill outer, a front side member, a rear side member, or the like, while the traverse member may be either of a front side member of which a rear portion bends outward widthwise, a rear side member or floor panel of which a front portion bends outward widthwise, or the like.

Further, the present invention is applicable to structures in which an opening of a cross member shaped approximately like a letter U in cross section is oriented downward and the cross member is joined to a side sill inner. In such an embodiment, the joint part between the side sill inner and the cross member may be reinforced as well by joining a riser portion of a stiffener to a side planar portion of the side sill inner, and joining a lateral portion thereof to a bottom planar portion of the cross member.

According to the invention as in claim 1, the riser portion and lateral portion of the stiffener shaped approximately like a letter L in cross section are joined respectively to the side planar portion of the front-rear direction member, and to the bottom planar portion of the traverse member, and thus, stiffness of the joint part between the front-rear direction member and the traverse member is increased. On the other hand, if the riser portion and lateral portion of the stiffener shaped approximately like a letter L in cross section are joined respectively to the side planar portion and bottom planar portion of the front-rear direction member, then the stiffener reinforces the front-rear direction member from the side planar portion along the bottom planar portion, and thus stiffness of the side planar portion and bottom planar portion of the front-rear direction member may be increased.

According to the invention as in claim 2, the riser wall portion of the stiffener reinforces the front planar portion or rear planar portion of the traverse member, and thus the traverse member may be reinforced against a collision load in a front-rear direction, in addition to the advantageous effect of the invention as in claim 1. Further, stiffness of the stiffener itself may also be increased as the riser wall portion of the stiffener reinforces the riser portion and lateral portion of the stiffener.

According to the invention as in claim 3, the continuously formed riser portion and riser wall portion are joined to the side planar portion of the front-rear direction member and the front planar portion or rear planar portion of the traverse member, and thus stiffness of the joint part between the front-rear direction member and the traverse member may further be increased, in addition to the advantageous effect of the invention as in claim 2.

According to the invention as in claim 4, the bottom planar portion of the front-rear direction member and the bottom planar portion of the traverse member are substantially flush with each other, and thus a side collision load may efficiently be transmitted to the bottom planar portion of the traverse member, and lateral stiffness of the vehicle body may be increased, in addition to the advantageous effect of the invention as in claims 1 through 3.

According to the invention as in claim 5, the tie-down bracket is used as a stiffener, and thus, in addition to the advantageous effect of the invention as in claims 1 through 4, no additional stiffener may be required as another part, whereby the number of parts may be reduced.

A vehicle body stiffener structure is provided to enhance stiffness of a joint part between a side sill inner and a cross member, specifically to enhance lateral stiffness of a vehicle body against a side collision load. An extended planar portion 2h of the cross member 2 is joined to a bottom planar portion 1c of the side sill inner 1 so that the bottom planar portion 1c of the side sill inner 1 and the bottom planar portion 2b of the cross member 2 are flush with each other. A lateral portion 3b of a tie-down bracket 3 is joined to a bottom planar portion 2b of the cross member 2, while the lateral portion of the tie-down bracket 3 is a side planar portion 1b of the side sill inner 1. Accordingly, the tie-down bracket 3 serves to increase stiffness of the joint part between the side sill inner 1 and the cross member 2. Since the bottom planar portion 1c of the side sill inner 1 and the bottom planar portion 2b of the cross member 2 are flush with each other, lateral stiffness against a side collision load is increased.

## Claims

1. Joint assembly of vehicle frame members (1, 2, 3; 4), comprising a front-rear direction member (1) extending in a front-rear direction of a vehicle body (M), a traverse member (2) extending in a traverse direction of said vehicle body (M), and a stiffener (3; 4), said front-rear direction member (1) including at least a side planar portion (1b) and a bottom planar portion (1c), said traverse member (2) including at least a bottom planar portion (2b), and said stiffener (3; 4) being shaped approximately like a letter L in cross-section and including a riser portion (3a; 4a) and a lateral portion (3b; 4b),
**characterized in that** said traverse member (2) at its end section facing said front-rear member (1) is provided with a flange portion (2e, 2f, 2h), said flange portion (2e, 2f, 2h) being attached to said front-rear member (1) for forming said joint of vehicle frame members (1, 2), and **in that** further said riser portion (3a; 4a) of the stiffener (3; 4) is attached to said side planar portion (1b) of the front-rear direction member (1), and said lateral portion (3b; 4b) of said stiffener (3; 4) is attached to anyone of said bottom planar portion (2b) of said traverse member (2) and said bottom planar portion (1b) of said front rear direction member (1), wherein said flange portion (2e, 2f, 2h) of said traverse member (2) constitutes a contact portion of said traverse member (2) to said front rear direction member (1), said front-rear direction member (1) and said traverse member (2) being joined with each other at said contact portion.

2. Joint assembly according to claim 1, **characterized in that** said traverse member (2) includes at least one of a front planar portion (2a) and a rear planar portion (2c) that rises from said bottom planar portion (2b), and **in that** said stiffener (4; 5) includes a riser wall portion (4d, 4e; 5d, 5e) that comes in contact with said one of said front planar portion (2a) and said rear planar portion (2c).

3. Joint assembly according to claim 2, **characterized in that** said riser portion (4a; 5a) and riser wall portion (4d, 4e; 5d, 5e) of said stiffener (4; 5) are continuously formed.

4. Joint assembly according to any one of claims 1 through 3, **characterized in that** said bottom planar portion (1c) of said front-rear direction member (1) and said bottom planar portion (2b) of said traverse member (2) are substantially flush with each other.

5. Joint assembly according to any one of claims 1 through 4, wherein said stiffener (3; 4; 5) is a tie-down bracket that reinforces a tie down hole (2i) formed in said bottom planar portion (2b) of said traverse member (2).

6. Joint assembly according to any one of said claims 1 through 5, **characterized in that** said flange portion (2e, 2f, 2h) comprises a side flange portion (2e, 2f) being in abutment with said side planar portion (1b) of said front-rear direction member (1).

7. Joint assembly according to any one of said claims 1 through 6, **characterized in that** said flange portion (2e, 2f, 2h) comprises a bottom flange portion (2h) being in abutment with said bottom planar portion (1c) of said front-rear direction member.

8. Joint assembly according to claim 7 and 4, **characterized in that** said bottom flange portion (2h) is formed as an extension of said bottom planar portion (2b) of said traverse member (2) and is cranked downwards with respect to said bottom planar portion (2b) by an amount corresponding to the thickness of said bottom planar portion (2b) of said traverse member (2).

9. Joint assembly according to any one of claims 1 through 8, **characterized in that** said front-rear direction member (1) has a top planar portion (1a), and further **in that** at the end section of said riser portion (5a) facing away from said lateral portion (5b) a stiffener flange portion (5f) is provided in abutment with said top planar portion (1a) and attached thereto.

10. Joint assembly according to claim 4, **characterized in that** said riser portion (3a) of the stiffener (3) is welded to said side planar portion (1b) of the front-rear member (1), said flange portion (2h) of the traverse member (2) is welded to said bottom planar portion (1c) of the front-rear member (1) and said lateral portion (3b) of the stiffener (3) is welded to said bottom planar portion (2b) of said traverse member (2).

## Patentansprüche

1. Verbindungsvorrichtung von Fahrzeugrahmengestellteilen (1, 2, 3; 4), welche ein Längsrichtungsteil (1), das sich in Längsrichtung einer Fahrzeugkarosserie (M) erstreckt, ein Querteil (2), das sich in Querrichtung der Fahrzeugkarosserie (M) erstreckt und einen Versteifer (3; 4) umfasst, wobei das Längsrichtungsteil (1) mindestens einen Seiten-Flachabschnitt (1b) und einen Boden-Flachabschnitt (1c) umfasst, wobei das Querteil (2) mindestens einen Boden-Flachabschnitt (2b) umfasst sowie der Versteifer (3; 4) etwa L-förmig im Querschnitt geformt ist und einen Vorsprung (3a; 4a) und einen Seitenabschnitt (3b; 4b) umfasst,
**dadurch gekennzeichnet, dass** das Querteil (2) an seinem dem Längsrichtungsteil (1) gegenüberstehenden Endabschnitt mit einem Schenkel (2e, 2f, 2h) versehen ist, der an dem Längsrichtungsteil (1) befestigt ist, um die Verbindung der Fahrzeugrahmengestellteile (1, 2) zu bilden, dass weiterhin der Vorsprung (3a; 4a) des Versteifers (3; 4) an dem Seiten-Flachabschnitt (1b) des Längsrichtungsteiles (1) befestigt ist, wobei der Seiten-Abschnitt (3b; 4b) des Versteifers (3; 4) an dem Boden-Flachabschnitt (2b) des Querteiles (2) oder dem Boden-Flachabschnitt (1b) des Längsrichtungsteiles (1) befestigt ist, wobei der Schenkel (2e, 2f, 2h) des Querteiles (2) einen Kontaktabschnitt des Querteiles (2) zu dem Längsrichtungsteil (1) bildet, wobei das Längsrichtungsteil (1) und das Querteil (2) miteinander durch den Kontaktabschnitt verbunden sind.

2. Verbindungsvorrichtung nach Anspruch 1, **dadurch gekennzeichnet, dass** das Querteil (2) einen Front-Flachabschnitt (2a) und/oder einen Rück-Flachabschnitt (2c) umfasst , der von dem Boden-Flachabschnitt (2b) vorspringt, und dass der Versteifer (4; 5) einen vorspringenden Wandabschnitt (4d, 4e; 5d, 5e) umfasst, der an dem Front-Flachabschnitt (2a) oder dem Rück-Flachabschnitt (2c) anliegt.

3. Verbindungsvorrichtung nach Anspruch 2, **dadurch gekennzeichnet, dass** der Vorsprung (4a; 5a) und der vorspringende Wandabschnitt (4d, 4e; 5d, 5e) des Versteifers (4; 5) einstückig geformt sind.

4. Verbindungsvorrichtung nach einem der Ansprüche 1 bis 3, **dadurch gekennzeichnet, dass** der Boden-Flachabschnitt (1c) des Längsrichtungsteiles (1) und der Boden-Flachabschnitt (2b) des Querteiles (2) im Wesentlichen miteinander fluchten.

5. Verbindungsvorrichtung nach einem der Ansprüche 1 bis 4, **dadurch gekennzeichnet, dass** der Versteifer (3; 4; 5) ein Befestigungswinkel ist, der eine Befestigungsöffnung (2i) in dem Boden-Flachabschnitt (2b) des Querteiles (2) verstärkt.

6. Verbindungsvorrichtung nach einem der Ansprüche 1 bis 5, **dadurch gekennzeichnet, dass** der Schenkel (2e, 2f, 2h) als Seitenschenkel (2e, 2f) ausgebildet ist, der an dem Seiten-Flachabschnitt (1b) des Längsrichtungsteiles (1) anliegt.

7. Verbindungsvorrichtung nach einem der Ansprüche 1 bis 6, **dadurch gekennzeichnet, dass** der Schenkel (2e, 2f, 2h) als Bodenschenkel (2h) ausgebildet ist, der an dem Boden-Flachabschnitt (1c) des Längsrichtungsteiles (1) anliegt.

8. Verbindungsvorrichtung nach Anspruch 7 und 4, **dadurch gekennzeichnet, dass** der Boden-Schenkel (2h) als Verlängerung des Boden-Flachabschnittes (2b) des Querteiles (2) geformt und nach unten bezüglich des Boden-Flachabschnittes (2b) abgekröpft ist und zwar in einer Dimension entsprechend der Dicke des Boden-Flachabschnittes (2b) des Querteiles (2).

9. Verbindungsvorrichtung nach einem der Ansprüche 1 bis 8, **dadurch gekennzeichnet, dass** das Längsrichtungsteil (1) mit einem oberen Flachabschnitt (1a) und weiterhin dass der Endabschnitt des Vorsprunges (5a) mit einem von dem Seitenabschnitt (5b) weggerichteten Schenkel (5f) zur Anlage und einer Befestigung an dem oberen Flachabschnitt (1a) versehen ist.

10. Verbindungsvorrichtung nach Anspruch 4, **dadurch gekennzeichnet, dass** der Vorsprung (3a) des Versteifers (3) an dem Seiten-Flachabschnitt (1b) des Längsrichtungsteiles (1) geschweißt ist, wobei der Schenkel (2h) des Querteiles (2) an dem Boden-Flachabschnitt (1c) des Längsrichtungsteiles (1) geschweißt ist und wobei der Seitenabschnitt (3b) des Versteifers (3) an dem Boden-Flachabschnitt (2b) des Querteiles (2) geschweißt ist.

## Revendications

1. Ensemble de liaison d'éléments de carrosserie de véhicule (1, 2, 3 ; 4), comportant un élément longitudinal (1) s'étendant dans le sens longitudinal d'une carrosserie de véhicule (M), un élément transversal (2) s'étendant dans le sens transversal de ladite carrosserie de véhicule (M), et un raidisseur (3 ; 4), ledit élément longitudinal (1) comportant au moins une partie plane latérale (1b) et une partie plane inférieure (1c), ledit élément transversal (2) comportant au moins une partie plane inférieure (2b), et ledit raidisseur (3 ; 4) présentant approximativement une forme de L en coupe transversale, et comportant une partie montante (3a ; 4a) et une partie latérale (3b ; 4b),
**caractérisé en ce que** ledit élément transversal (2), au niveau de son tronçon d'extrémité dirigé vers ledit élément longitudinal (1), est muni d'une partie de rebord (2e, 2f, 2h), ladite partie de rebord (2e, 2f, 2h) étant fixée sur ledit élément longitudinal (1) pour former ladite liaison d'éléments de carrosserie de véhicule (1, 2), et **caractérisé en outre en ce que** ladite partie montante (3a ; 4a) du raidisseur (3 ; 4) est fixée sur ladite partie plane latérale (1b) de l'élément de sens longitudinal (1), et ladite partie latérale (3b ; 4b) dudit raidisseur (3 ; 4) est fixée sur un élément quelconque parmi ladite partie plane inférieure (2b) dudit élément transversal (2) et ladite partie plane inférieure (1b) dudit élément de sens longitudinal (1), ladite partie de rebord (2e, 2f, 2h) dudit élément transversal (2) constituant une partie de contact dudit élément transversal (2) avec ledit élément de sens longitudinal (1), ledit élément de direction longitudinale (1) et ledit élément transversal (2) étant réunis l'un avec l'autre au niveau de ladite partie de contact.

2. Ensemble de liaison selon la revendication 1, **caractérisé en ce que** ledit élément transversal (2) comporte au moins un élément parmi une partie plane avant (2a) et une partie plane arrière (2c) qui monte à partir de ladite partie plane inférieure (2b), et **en ce que** ledit raidisseur (4 ; 5) comporte une partie de paroi montante (4d, 4e ; 5d, 5e) qui vient en contact avec ledit un élément parmi ladite partie plane avant (2a) et ladite partie plane arrière (2c).

3. Ensemble de liaison selon la revendication 2, **caractérisé en ce que** ladite partie montante (4a ; 5a) et ladite partie de paroi montante (4d, 4e ; 5d, 5e) dudit raidisseur (4 ; 5) sont formées en continu.

4. Ensemble de liaison selon l'une quelconque des revendications 1 à 3, **caractérisé en ce que** ladite partie plane inférieure (1c) dudit élément de sens longitudinal (1) et ladite partie plane inférieure (2b) dudit élément transversal (2) sont sensiblement affleurantes l'une avec l'autre.

5. Ensemble de liaison selon l'une quelconque des revendications 1 à 4, dans lequel ledit raidisseur (3 ; 4 ; 5) est un étrier d'ancrage qui renforce un trou d'ancrage formé dans ladite partie plane inférieure (2b) dudit élément transversal (2).

6. Ensemble de liaison selon l'une quelconque des revendications 1 à 5, **caractérisé en ce que** ladite partie de rebord (2e, 2f, 2h) comporte une partie de rebord latérale (2e, 2f) en butée avec ladite partie plane latérale (1b) dudit élément de sens longitudinal (1).

7. Ensemble de liaison selon l'une quelconque des revendications 1 à 6, **caractérisé en ce que** ladite partie de rebord (2e, 2f, 2h) comporte une partie de rebord inférieure (2h) en butée avec ladite partie plane inférieure (1c) dudit élément de sens longitudinal.

8. Ensemble de liaison selon les revendications 7 et 4, **caractérisé en ce que** ladite partie de rebord inférieure (2h) est formée sous la forme d'un prolongement de ladite partie plane inférieure (2b) dudit élément transversal (2), et est coudée vers le bas par rapport à ladite partie plane inférieure (2b) d'une quantité correspondant à l'épaisseur de ladite partie plane inférieure (2b) dudit élément transversal (2).

9. Ensemble de liaison selon l'une quelconque des revendications 1 à 8, **caractérisé en ce que** ledit élément longitudinal (1) a une partie plane supérieure (1a), et en outre **en ce qu'**au niveau du tronçon d'extrémité de ladite partie montante (5a) dirigée loin de ladite partie latérale (5b), une partie de rebord de raidisseur (5f) est agencée en butée avec ladite partie plane supérieure (1a), et est fixée sur celle-ci.

10. Ensemble de liaison selon la revendication 4, **caractérisé en ce que** ladite partie montante (3a) du raidisseur (3) est soudée sur ladite partie plane latérale (1b) de l'élément longitudinal (1), ladite partie de rebord (2h) de l'élément transversal (2) est soudée sur ladite partie plane inférieure (1c) de l'élément longitudinal (1), et ladite partie latérale (3b) du raidisseur (3) est soudée sur ladite partie plane inférieure (2b) dudit élément transversal (2).
